# EUROPEAN PATENT SPECIFICATION

(11) **EP 2 355 204 B1**
(45) Date of publication and mention of the grant of the patent: **10.10.2012**
(21) Application number: 10001045.3
(22) Date of filing: 02.02.2010
(51) Int. Cl.: H01M 2/10, H01M 2/18, H01M 8/02, H01M 8/24, H01M 10/42, H01M 10/50, F28D 1/00

(54) **Conformal heat exchanger for battery cell stack**
Konformer Wärmetauscher für Batteriezellenstapel
Échangeur thermique conforme pour un empilement batterie

(43) Date of publication of application: 10.08.2011
(73) Proprietor: Dana Canada Corporation, Oakville, Ontario L6K 3E4 (CA)
(72) Inventor: Palanchon, Hervé, 51373 Leverkusen (DE); Kozdras, Mark, S., Oakville Ontario L6M 1S6 (CA); Martin, Michael, A., Hamilton Ontario L8V 2V1 (CA); Burgers, John, Oakville Ontario L6M 1B7 (CA)
(74) Representative: Pfenning, Meinig & Partner GbR

(56) References cited:
- EP-A1- 1 610 407
- WO-A1-02/27816
- WO-A1-2007/082863
- WO-A2-03/071616
- JP-A- 2000 048 867
- US-A1- 2007 285 051
- US-A1- 2009 301 700

## Description

### Background

This disclosure relates to heat exchangers used to dissipate heat in rechargeable batteries and other electricity producing cells.

Rechargeable batteries such as batteries made up of many lithium-ion cells can be used in many applications, including for example in electric vehicle ("EV") and hybrid electric vehicle ("HEV") applications. Such batteries can generate large amounts of heat that needs to be dissipated.

Examples of battery structures can be seen in: JP 2000 048867 A, which discloses a battery pack that includes corrugated plate-like springs located between adjacent battery cells; WO 03/071616, which discloses an energy storage device in which a plaint bladder is located between adjacent electrochemical cells; US2007/0285051 A1 and EP 1 610 407 A1 each disclose battery modules in which cooling structures are located between adjacent battery cells.

### Summary

The invention relates to a battery unit as defined in claim 1.

### Brief Description of Drawings

Figure 1 is an end view of a battery unit according to an example embodiment.
Figure 2 is a perspective view of a fin plate used as a heat exchanger according an example embodiment.
Figure 3 is a perspective view of a fin plate used as a heat exchanger according to another example embodiment.
Figure 4 is a perspective view of a fin plate used as a heat exchanger according to another example embodiment.
Figure 5 is an end view of a fin plate used as a heat exchanger according to another example embodiment.
Figures 6-8 are each enlarged partial end views of battery units according to alternative example embodiments.
Figure 9 is a perspective view of a fin plate used as a heat exchanger according to another example embodiment.
Figure 10 is an end view of a fin plate used as a heat exchanger according to another example embodiment.
Figures 11A-11D are partial views illustrating mechanical interlocks that can be applied to fin plates in example embodiments.
Figure 12 and 13 are each enlarged partial end views of battery units according to alternative example embodiments.

### Description of Example Embodiments

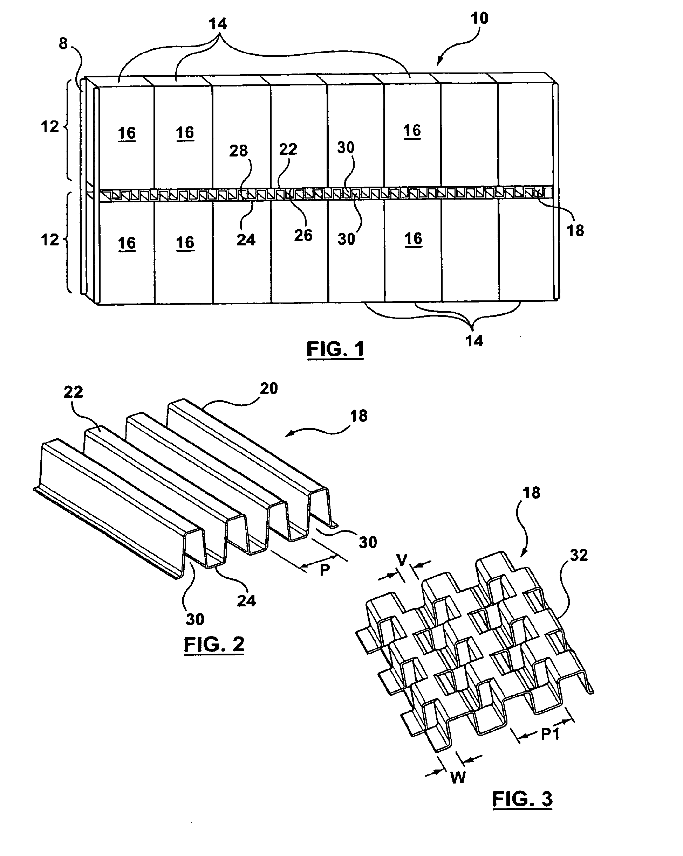

Figure 1 shows an illustrative example of a rechargeable battery unit 10 according to example embodiments of the invention. The battery unit 10 is made up of battery stacks 12 which in turn are made of battery packs or modules 14 that each house one or more battery cells 16. The illustrated embodiment includes two rectangular box-like stacks 12, each of which is made up of eight horizontally arranged modules 14, with each module housing one or more battery cells 16. The number of stacks 12 in the battery 10, the number of modules 14 in each stack, and the number of battery cells 16 in each module 14 can vary, and the orientation and shape of these components can vary as well from application to application and accordingly the quantities and orientation specified herein are provided as an example of an illustrative embodiment only.

In at least some example embodiments, battery cells 16 are lithium-ion battery cells, however other rechargeable battery cells could be used. In some embodiments, battery cells 16 are prismatic lithium-ion battery cells. In other example embodiments, battery cells 16 have cylindrical or other shapes. In the illustrated embodiment, each module 14 includes a rectangular substantially rigid box-like case housing one or more battery cells 16. By way of non limiting example, 1 to 20 battery cells 16 may be located in each module 14, however more that 20 battery cells may be located in a module 14 in some embodiments. In some embodiments, all of the modules 14 within a stack 12 are substantially identical and the stacks 12 that make up a battery unit 10 are substantially identical. The stacks 12 may be mounted side by side or one above the other in a support frame or rack 8.

According to example embodiments, a heat exchanger 18 that is located between opposing surfaces 26 and 28 of adjacent stacks 12. The contact region between the respective stacks 12 and the intermediate heat exchanger 18 may not be a planar surface, and furthermore may be subject to expansion and contraction during heating and cooling. Accordingly, a heat exchanger 18 that can maintain consistent contact with the geometry of the modules 14 of the stack over a range of temperatures and provide good heat conductivity is desirable in some applications. In this regard, example embodiments relate to a heat exchanger structure that is dimensionally compliant to compress under expansion of the first and second battery stacks and expand under subsequent contraction of the first and second battery stacks such that the heat exchange structure remains in thermal contact with the battery stacks throughout a range of normal battery operating temperatures

Referring to Figure 2, in one example embodiment heat exchanger 18 is formed from a plain convoluted or corrugated fin plate 20 that defines a plurality of air-flow passages 30 between the adjacent battery stacks 12. The fin plate 20 may for example be formed from stamping or rolling a heat conductive metal such as aluminum, aluminum alloy or stainless steel. The sheet material used to make corrugated fin plate 20 could, by way of non-limiting example, have a thickness in the range of 0.1mm to 1.0mm, although thicknesses outside this range may be used in some applications. In some example embodiments, the fin plate 20 has a pitch P of between 5 and 15 mm, and a height between 10mm to 40mm, although different fin densities and fin heights could be used in different embodiments. In some example embodiments, the corrugations of the fin plate 20 run parallel to the shorter dimension of the rectangular surface defined by the stack surfaces that the fin plate contacts.

In at least some example embodiments, the fin plate 20 has a degree of elasticity in that it can be deformed under compression and then return back to its original form or at least partially to its original from as the force compressing it is reduced or removed. In an example embodiment, the battery unit frame 8 is configured to support substantially all or most of the weight of the top stack 12 such that at an ambient temperature the fin plate 20 is held between the stacks 12 with substantially all of the flat fin surfaces 22 on one side of the fin plate 20 being in contact with the surface 26 of one of the module stacks 12 and substantially all of the flat fin surfaces 24 of the opposite side of the fin plate 20 being in contact with the opposing surface of the other module stack 12. As the temperature of the stacks 12 rise during use modules 16 and fin plate 20 are all subject to thermal expansion such that the fin plate 20 is subjected to a greater compressive force between the stack surfaces 26 and 28, causing the fine plate 12 to deform and the contact force between the fin surfaces 22 and 24 and the stack surfaces 26 and 28 to increase, respectively. As the stacks 12 cool, the elasticity of the fin plate 20 keeps the fin surfaces 22 and 24 in contact with respective stack surfaces 26 and 28 as the modules 16 and fin plate 20 contract. Accordingly, in an example embodiment, the fin plate 20 is dimensionally compliant in that it conforms to the opposed stack surfaces 26, 28 (and thus the battery modules 16) during the temperature cycling that the battery unit 10 undergoes during its use allowing for uninterrupted heat transfer during expansion and contraction of the battery stacks.

During use, air or other fluids can pass between the battery stacks 12 through the passages 30 that are defined by the corrugations of the fin plate 20. In some applications, the passing air or fluid can be used to draw heat away from the fin plate 20, and in some applications, the air or fluid flow can be used to add heat to the fin plate 20. In some applications the fin plate 20 can be used to cool the battery unit 10 during certain operating temperatures and heat the battery unit during other operating temperatures.

In some example embodiments at least one side of the fin plate 20 is coated in a brazing material and the fin plate 20 secured to one or both of the battery stacks 12 by brazing. In some example embodiments, a braze shim in the form of a thin plate coated in or formed from braze material is positioned between the opposite sides of the fin plate 20 and the respective stack surfaces to facilitate brazing. In some embodiments, the fin plate 20 is held between the battery stack by compressive forces alone or by connections to battery frame 8 or both. In some applications, fin plate 20 is attached to one or both of the stacks 12 by spot welding or adhesives or by fasteners such as, for example, rivets or bolts or clips.

As noted above, in some configurations the opposed stack surfaces 26, 28 that are defined by the battery modules 14 may not be planar surfaces - for example, there could be ridges or other protrusions on the battery modules 14 that extend partially into the area occupied by the fin plate 20. In example embodiments, any ridges or other protrusions that may extend from the opposed surfaces 26, 28 of the respective module 14 casings are aligned with corrugation valleys of the fin plate 20.

The fin plate 20 is one example of a conformal or dimensionally compliant structure that can be used to implement an inter-battery module heat exchanger 18. Other conformal or dimensionally compliant heat exchanger configurations that are also capable of maintaining contact with battery stacks 12 during the battery unit temperature cycles are also possible. By way of example, Figure 3 shows a further possible conformal fin plate configuration that could be used to implement heat exchanger 18. The fin plate 32 of Figure 3 is a resilient compressible offset strip fin formed from a metal such as aluminum, aluminum alloy or stainless steel. The sheet material used to make offset strip fin plate 32 could, by way of non-limiting example, have a thickness in the range of 0.1mm to 1.0mm, although thicknesses outside this range may be used in some applications. In some example embodiments, the fin plate 32 has a pitch P1 of between 5 and 20 mm, an offset width W of between 2 and 10 mm and a corrugation valley V of between 1.5 and 5 mm, and a height between 10mm to 40mm, although different fin densities, pitches, offset widths, valley widths and fin heights could be used in different embodiments.

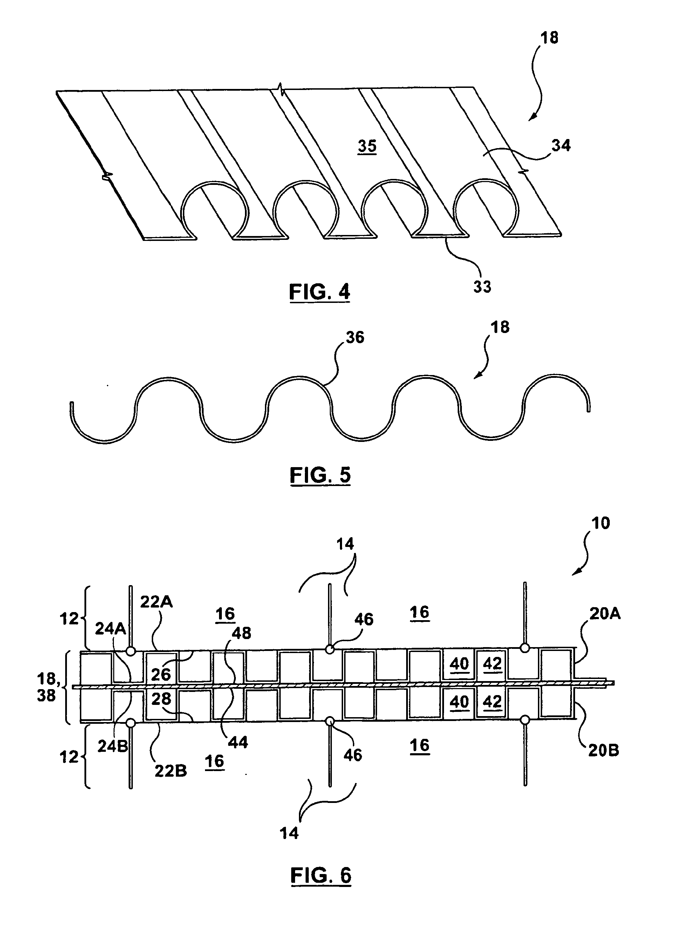

Other examples of conformal fin configurations for heat exchanger 18 is illustrated in Figure 4 which shows a dimensionally compliant "Omega" fin plate 34 that defines rows of parallel semi-cylindrical portions 35 joined by planar portions 33, at least some of the semi-cylindrical portions 35 contacting the first battery stack side 26 and at least some of the planar portions 33 contacting the second battery stack side 28 to facilitate heat exchange between the fin plate and the first and second battery stacks.

Figure 5 shows a further alternative in the form of sinusoidal fin plate 36, which in at least some applications can be used in place of the flat-sided fin plate 20 with similar conformal effects. The sinusoidal plate in Figure 5 is a plain sinusoidal plate, but in some applications and "offset" sinusoidal fin plate could be used which would have a configuration similar to that of Figure 3, except with sinusoidal undulations rather than square undulations.

In some example embodiments, combinations of multiple fin plates can be used to implement inter-battery module dimensionally compliant heat exchanger 18. By way of example, Figure 6 illustrates a double-fin plate assembly 38 for implementing heat exchanger 18. The double-fin plate assembly 38 includes two back-to-back flat-sided fin plates 20A and 20B, which may for example each be identical to fin plate 20.

As shown in Figure 6 first fin plate 20A and second fin plate 20B are aligned such that their respective valley surfaces 24A, 24B meet at the center of the area between stacks 12 and their respective peak surfaces 22A, 22B contact respective stack surfaces 26, 28 at opposed locations. Such a configuration creates a series of parallel air or fluid passages 40 and 42, with passages 40 being defined between the corrugation valley of plate 20A and stack surface 26 and the corrugation valley of plate 20B and stack surface 28, and passages 42 being defined between the corrugation peaks of plates 20A and 20B. In at least one example embodiment double-fin plate assembly 38 includes a planar intermediate member 44 located between the back-to-back fin plates 20A, 20B such that the valley surfaces 24A and 24B contact opposite sides of the central plate 44. In an example embodiment the planar intermediate member 44 is a plate formed from aluminum, aluminum alloy, stainless steel or other suitable metal and one or both of the first fin plate 22A and second fin plate 22B are secured to its respective side of the planar plate 44 by brazing or spot welding. In some example embodiments, the double fin plate assembly 38 is held together by compressive forces without any brazing or spot welding.

In some example embodiments, any ridges or other protrusions that may extend from the opposed surfaces 26, 28 of the respective module 14 casings are aligned with the passages 40 defined by the corrugation valleys of the fin plates 20A and 20B. By way of example, protruding ribs 46 are shown in Figure 6 that are aligned with respective corrugation valleys 40. Accordingly, back-to-back fin plate 38 can allow aligned or symmetrical protrusions on the opposed surfaces 26, 28 to be accommodated in corrugation valleys without impacting the heat exchange contact surface at the corrugation peaks.

In some example embodiments, the fin heights through out the fin plate could vary along the length or width of the fin plate to accommodate variations or protrusions along the opposed surfaces of the battery stacks.

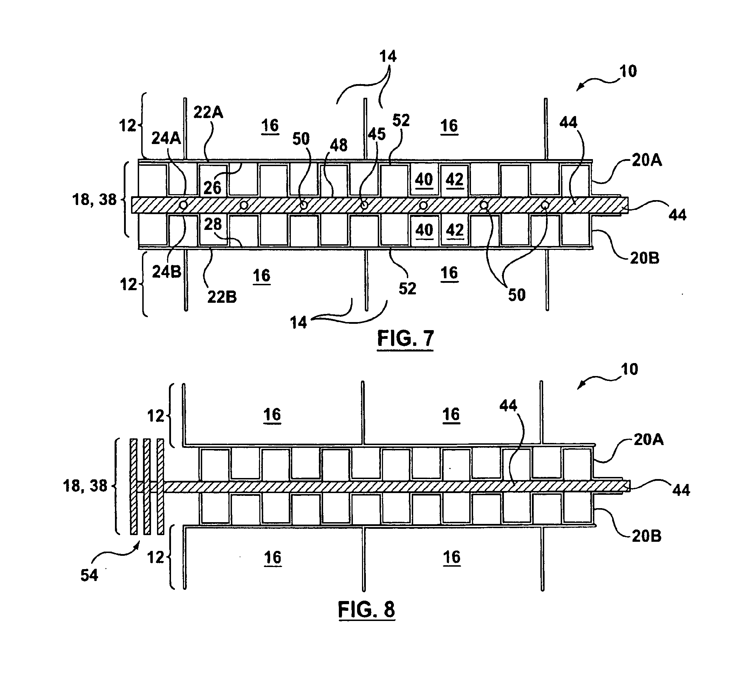

In some example embodiments, the planar intermediate member 44 includes a plate substrate that is coated on one or both sides with a sheet or film heater 48 that can be used to add heat to the fin plates 20A and 20B and battery stacks 12 in cold start up conditions for example. In some example embodiments, the planar intermediate member 44 is formed from a conductive slab or a powder pack that is made from highly thermally conductive graphite or metal. In some example embodiments, planar intermediate member 44 of double fin plate assembly 38 is a cooling plate that includes fluid conduits 50, as shown in Figure 7, for routing a cooling fluid such as cooled air or cooled liquid though the intermediate member 44. In some example embodiments, film heater 48 is combined with cooling fluid conduits 50, providing an intermediate member 44 that can be used to actively heat or actively cool the double fin plate assembly 38 as required at different stages in a battery operating cycle. In some example embodiments the intermediate member 44 encloses a phase change material 45 such as organic wax or inorganic salts that changes phase at a desired operating temperature to draw heat energy away from plates 20A, 20B. In some example embodiments, the planar intermediate member 44 is formed from a graphite slab or a graphite powder pack. In some example embodiments, for example where intermediate member 44 is a graphite slab or graphite pack, end fins 54 such as shown in Figure 8 could be attached to ends of the intermediate member 44 to extend beyond the outer edges of the battery stacks 12 to draw heat out of the double plate fin assembly 38. End fins 54 could for example include an aluminum tube having one end embedded into a graphite slab or graphite pack and an extending end with radial fins. In some example embodiments conduits similar to conduits 50 discussed above filled with such a phase change material and be embedded in intermediate member 44. In some example embodiments, the use of phase change materials and active heating or cooling systems can be combined in intermediate member 44.Turning again to Figure 7, in some example embodiments, an intermediate material 52 such as graphite powder coating or other lubricant coating may be provided on the surfaces of the fin plates 20A, 20B that contact the battery stack surfaces 26, 28 in order to reduce abrasion between the fin surface and the stack surfaces and enhance heat transfer at the fin/stack interfaces. In some example embodiment, intermediate material 52 may be an electrically non-conductive but thermally conductive material to electrically isolate the fin plate but still maintain thermal contact between the fin plate and the battery stack(s).

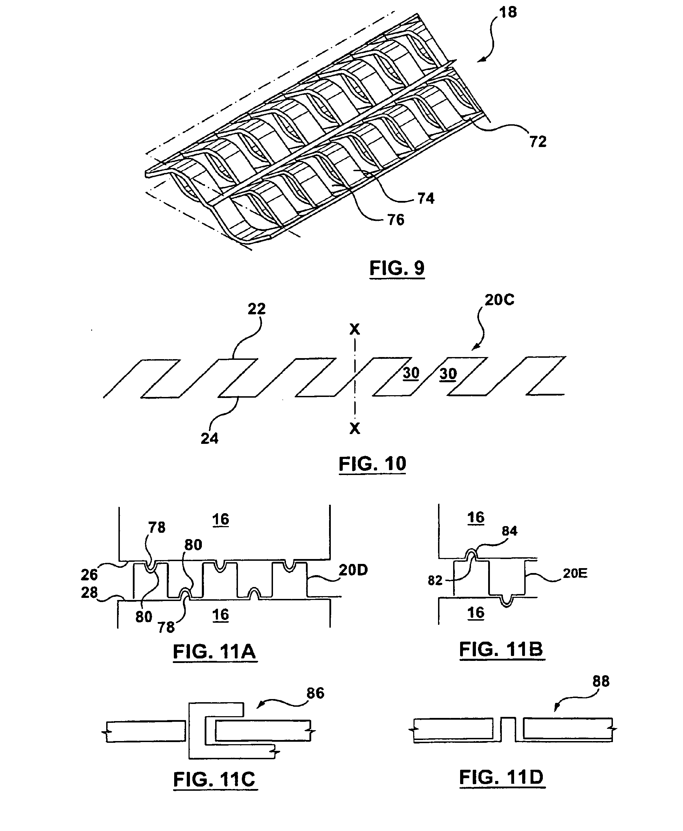

In one example embodiment, conformal heat exchanger 18 may be implemented using a formed plate 72 as shown in Figure 9. The formed plate 72 includes successive rows of alternating sinusoidal strips 74, 76 formed in a single plate.

In another example embodiment, conformal heat exchanger 18 may be implemented using a bi-metallic mat, formed from 2 metals that have different thermal expansion characteristics such that the thickness of bi-metallic mat expands during heating, thereby increasing the contact force between the mat and the stack surfaces 26, 28.

With reference to Figure 10, another single fin plate configuration for implementing conformal heat exchanger 18 is illustrated as fin plate 20C which is similar to fin plate 20 discussed above except that the fins in fin plate 20C are cantered such that the fin valleys on opposite sides of the plate 20C are vertically aligned as indicated by line X-X in Figure 10. The vertical alignment allows protrusions aligned on opposed stack surfaces 26, 28 to be accommodated in valleys of the fin plate 20C. This example embodiment of a fin plate 20C can substitute for back-to-back fin plates 20A and 20B, for example.

In some example embodiments, the fin plates used to implement heat exchanger 18 may include metallurgical or mechanical interlocks with each other or with the surfaces of battery modules 14 in order to reduce relative movement between the plates and the battery modules and mitigate against abrasion. By way of example, Figure 11A and Figure 11B both show respective single fin plates 20D and 20E that are similar to single fin plate 20 except that fin plate 20D includes grooves or receptacles 80 on its contact surfaces for receiving ridges or protrusions 78 located on battery module surfaces 26, 28 to create a mechanical interlock, and fin plate 20E includes ridges or protrusions 82 on its contact surfaces for extending into grooves or receptacles 84 located on battery module surfaces 26, 28 to create a mechanical interlock. Similar interlocks can be provided at inter-plate contact surfaces between back-to-back fin plate assemblies, as well as between fin plates and intermediate member 44. Other male/female mechanical interlocks between fin plates and between fin plates and battery module surfaces are possible as represented by the interlock systems 86 and 88 shown in Figures 11C and 11D.

In some example embodiments, the fin plates or intermediate members 44 used in the above described conformation heat exchanger configurations could include flange portions that extend beyond the edges of the battery stacks 12 and mounting holes and or additional heat exchange structures such as fins could be provided on the extending flange portions.

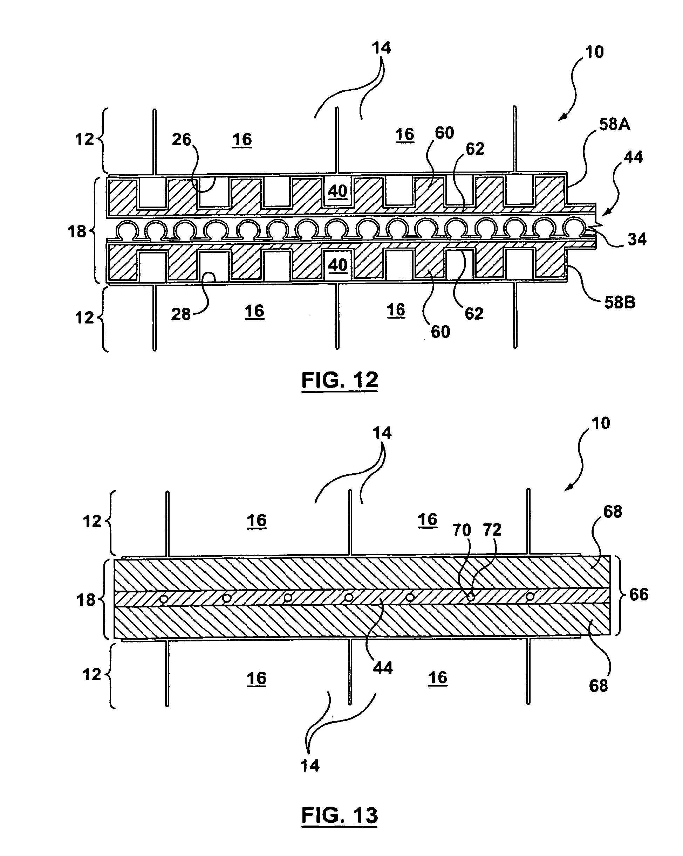

Another example embodiment of a fin structure for implementing inter-battery module conformal heat exchanger 18 is a pair of back-to-back graphite fin plates 58A, 58B as illustrated in Figure 12. Each graphite fin plate 58A, 58B includes a central fin core 62 from which a plurality of fins 60 extend in opposite directions to contact battery stack surfaces 26, 28, respectively. Fluid flow passages 40 are defined between adjacent fins 60 on each fin plate 58A, 58B. In one example embodiment, a conformal structure such as any of the metal fin plates disclosed above is positioned as an intermediate member 44 between the back-to-back graphite fin plates 58A, 58B. By way of example, in Figure 12 conformal metal "Omega" style fin plate 34 is located between the back-to-back graphite fin plates 58A, 58B to provide elasticity such that the fin plate 34 back-to-back graphite fin plates 58A, 58B collectively provide a dimensionally compliant heat exchange structure 18 in which the graphite fin plates 58A, 58B stay in contact with the respective battery stack surfaces 26, 28 throughout the temperature cycling that the battery unit 10 undergoes during its operation. Fluid flow passages 40 can be positioned to accommodated protrusions or disturbances located on the stack surfaces 26, 28. Graphite fin plates 58A, 58B may for example be formed from machined graphite that in at least some example embodiments is non-conductive to provide electrical isolation between the heat exchanger structure 18 and the battery stacks. In some example embodiments, the fins 60 of graphite fin plates 58A, 58B are cantered or angled in a manner similar to the fin plate of Figure 10.

Another example embodiment of a fin structure for implementing inter-battery module conformal heat exchanger 18 is a graphite assembly 66 as illustrated in Figure 13. Graphite assembly 66 includes intermediate member 44 that is sandwiched between a pair of packed graphite members 68 which in turn contact battery stack surfaces 26, 28. In one example embodiment, the packed graphite members 68 are configured to deform as they are compressed when the stacks 12 thermally expand during battery use, and subsequently return to their original shape as the stacks 12 thermally contract such that the packed graphite members 68 are continually in contact with respective surfaces 26 and 28 during the temperature cycles of the battery unit 10. The packed graphite members 68 may also be configured to accommodate protrusions on surfaces 26 and 28. In some example embodiments the central plate member 44 can include cavities or channels 70 that may for example be used for circuiting a cooling or heating fluid through the intermediate plate member 44. In some example embodiments, the intermediate plate member channels 70 could contain phase change material 72 that changes phase at a temperature within an operating temperature range of the battery unit 10. In some example embodiments the central plate member 44 could be a graphite plate with channels 70 being defined by metal tubes. In some example embodiments the intermediate member 44 is a conformal metal fin plate such as Omega fin plate 34 or any of the other metal fin plates discussed above.

In some example embodiments, in place of flat-sided corrugated fin plates 20A, 20B the back-to-back fin plate assembly 38 could be formed from plates having other configurations, for example plates 20C - 20E, off-set fin plates 32, omega style fin plates 34, sinusoidal fin plates 36, formed plate 72, angled fin plate 20C or louvered plates, among other things can be arranged back-to-back with or without an intermediate member 44 to implement a double-fin plate assembly. In some example embodiments, louvered plates could be used in place of fin plates for either a single plate or back-to-back double plate conformal heat exchanger.

In some example embodiments, the planer intermediate member 44 could be used in combination with a single fin plate such as fin plates 20, 20A-20E, 32, 34 and 36 without a second fin plate.

In some example embodiments, the fluid flow passages (for example passages 30 in plate 20) through a plate can be interconnected to provide a single flow passage for a cooling liquid through the plate.

In some example embodiments the conformal heat exchanger configurations described above could be used between fuel cell modules in place of battery cell modules. Accordingly, the heat exchanger structures described herein can be used in a power producing unit that comprises a first stack comprising a plurality of power producing cells such as battery cell modules or fuel cell modules and a second stack comprising a plurality of power producing cells such as battery cell modules or fuel cell modules, the heat exchanger structure being disposed between opposing surfaces of the first stack and the second stack and defining one or a plurality of fluid flow passages, the heat exchanger structure being dimensionally compliant to compress under expansion of the first and second stacks and expand under subsequent contraction of the first and second stacks.

Accordingly, described herein are example embodiments of conformal exchangers for use between electrical power generating cells or modules. In at least some example embodiments single or back to back metal fin plates are used, such plates being constructed of thermally conductive and deformable materials such as, aluminum, aluminum alloy, copper, copper alloy, steel, stainless steel or spring steel. The plates are dimensionally compliant in that they can be deformed under compressive forces and then return to a former shape as the compressive forces decrease. The plates can be coated to electrically isolate them from the battery module surfaces that they contact. The fin plates are selected such that they can rebound to their original shape within load ranges, and maintain thermal contact with the battery modules at least during the normal temperature ranges that battery unit 10 is exposed to.

## Claims

1. A battery unit (10) comprising:
a first battery stack (12) comprising a plurality of battery modules (14), each of the battery modules housing one or more battery cells (16), the plurality of battery modules (14) of the first battery stack (12) defining a first battery stack side (26);
a second battery stack (12) comprising a plurality of battery modules (14), each of the battery modules housing one or more battery cells (16), the plurality of battery modules (14) of the second battery stack (12) defining a second battery stack side (28) that is spaced apart from and opposing the first battery stack side; and
a heat exchanger structure (18) disposed between the first battery stack (12) and the second battery stack (12) and defining one or a plurality of fluid flow passages (30), the heat exchanger structure having a first side (22, 22A) contacting the first battery stack side (26) across a plurality of the battery modules (14) and a second side (24, 22B) contacting the second battery stack side (28) across a plurality of the battery modules (14), wherein the heat exchanger structure is elastically deformable to compress under expansion of the first and second battery stacks and expand under subsequent contraction of the first and second battery stacks.

2. The battery unit of claim 1 wherein the heat exchanger structure (Z18) comprises a corrugated fin plate (20) having alternating peaks (22) and valleys (24) defining the fluid flow passages (30) therebetween, at least some of the peaks (22) contacting the first battery stack side (26) and at least some of the valleys (24) contacting the second battery stack side (28) to facilitate heat exchange between the fin plate and the first and second battery stacks.

3. The battery unit of claim 2 wherein the fin plate corrugations are cantered such that the valleys on opposite sides of the plate are aligned.

4. The battery unit of claim 1 wherein the heat exchanger structure (18) comprises a fin plate (34) defining rows of parallel semi-cylindrical portions joined by planar portions, at least some of the semi-cylindrical portions contacting the first battery stack side (26) and at least some of the planar portions contacting the second battery stack side (28) to facilitate heat exchange between the fin plate and the first and second battery stacks.

5. The battery unit of claim 1 wherein the heat exchanger structure (18) comprises a first fin plate (20A) and a second fin plate (20B), the first and second fin plates being located adjacent to each other with first fin plate (20A) contacting the first battery stack side (26) at a plurality of locations and the second fin plate (20B) contacting the second battery stack side (28) at a plurality of locations.

6. The battery unit of claim 5 wherein the first fin plate (20A) and the second fin plate (20B) are arranged in back-to-back alignment and the first fin plate is a corrugated fin plate having alternating peaks (22) and valleys (24) and the second fin plate is a corrugated second fin plate (20B) having alternating peaks (22) and valleys (24), with a plurality of the peaks of the first fin plate (20A) contacting the first battery stack side (26) and a plurality of the peaks of the second fin plate (20B) contacting the second battery stack side (28).

7. The battery unit of claim 5 or 6 wherein an intermediate plate (44) is located between the first fin plate (20A) and the second fin plate (20B).

8. The battery unit of claim 7 wherein the intermediate plate comprises an active heating element (48).

9. The battery unit of claim 7 or 8 wherein the intermediate plate comprises fluid conduits (50) for conducting a fluid through the intermediate plate.

10. The battery unit of any one of claims 7 to 9 wherein the intermediate plate encloses a phase change material having a phase change temperature falling within a normal operating temperature range of the battery unit.

11. The battery unit of claim 5 wherein the fin plates are each formed from graphite and a conformal structure is located therebetween.

12. The battery unit of any one of claims 1 to 11 wherein the heat exchanger structure is under compressive forces between the first battery stack and the second battery stack across a normal operating temperature range of the battery unit.

13. The battery unit of claim 1 wherein the heat exchanger structure (18) comprises an elastically deformable corrugated first fin plate (20A) having alternating peaks and valleys, and an elastically deformable corrugated second fin plate (20B),having alternating peaks and valleys, the first and second fin plates being located adjacent to each other with a plurality of the peaks of the first fin plate (20A) contacting the first battery stack side (26) and a plurality of the peaks of the second fin plate (20B) contacting the second battery stack side.

14. The battery unit of claim 13 wherein the first fin plate (20A) and the second fin plate (20B) are arranged in back-to-back alignment with the valleys of the first fin plate being aligned with respective valleys of the second fin plate.

15. The battery unit of claim 13 or 14 wherein an intermediate plate (44) is located between the first fin plate (20A) and the second fin plate (20B).

## Patentansprüche

1. Batterieeinheit (10), welche aufweist:
einen ersten Batteriestapel (12) aufweisend mehrere Batteriemodule (14), wobei jedes der Batteriemodule eine oder mehr Batteriezellen (16) aufnimmt und die mehreren Batteriemodule (14) des ersten Batteriestapels (12) eine erste Batteriestapelseite (26) definieren;
einen zweiten Batteriestapel (12) aufweisend mehrere Batteriemodule (14), wobei jedes der Batteriemodule eine oder mehr Batteriezellen (16) aufnimmt und die mehreren Batteriemodule (14) des zweiten Batteriestapels (12) eine zweite Batteriestapelseite (28) definieren, die im Abstand von und gegenüberliegend der ersten Batteriestapelseite angeordnet ist; und
eine Wärmetauscherstruktur (18), die zwischen dem ersten Batteriestapel (12) und dem zweiten Batteriestapel (12) angeordnet ist und
einen oder mehrere Fluidströmungsdurchgänge (30) definiert, welche Wärmetauscherstruktur eine erste Seite (22, 22A), die die erste Batteriestapelseite (26) über mehrere der Batteriemodule (14) kontaktiert,
und eine zweite Seite (24, 22B), die die zweite Batteriestapelseite (28) über mehrere der Batteriemodule (14) kontaktiert, hat, wobei die Wärmetauscherstruktur elastisch verformbar ist, um bei Ausdehnung des ersten und des zweiten Batteriestapels zusammengedrückt zu werden und sich bei nachfolgendem Zusammenziehen des ersten und des zweiten Batteriestapels auszudehnen.

2. Batterieeinheit nach Anspruch 1, bei der die Wärmetauscherstruktur (18) eine gewellte Rippenplatte (20) mit einander abwechselnden Spitzen (22) und Tälern (24), die die Fluidströmungsdurchgänge (30) zwischen sich bilden, aufweist, wobei zumindest einige der Spitzen (22) die erste Batteriestapelseite (26) kontaktieren und zumindest einige der Täler (24) die zweite Batteriestapelseite (28) kontaktieren, um einen Wärmeaustausch zwischen der Rippenplatte und dem ersten und dem zweiten Batteriestapel zu erleichtern.

3. Batterieeinheit nach Anspruch 2, bei der die Wellen der Rippenplatte derart abgeschrägt sind, dass die Täler auf entgegengesetzten Seiten der Platte ausgerichtet sind.

4. Batterieeinheit nach Anspruch 1, bei der die Wärmetauscherstruktur (18) eine Rippenplatte (34) aufweist, die Reihen von parallelen, halbzylindrischen Bereichen, die durch ebene Bereiche verbunden sind, definiert, wobei zumindest einige der halbzylindrischen Bereiche die erste Batteriestapelseite (26) kontaktieren und zumindest einige der ebenen Bereiche die zweite Batteriestapelseite (28) kontaktieren, um den Wärmeaustauschen zwischen der Rippenplatte und dem ersten und dem zweiten Batteriestapel zu erleichtern.

5. Batterieeinheit nach Anspruch 1, bei der die Wärmetauscherstruktur (18) eine erste Rippenplatte (20A) und eine zweite Rippenplatte (20B) aufweist, wobei die erste und die zweite Rippenplatte zueinander benachbart angeordnet sind und die erste Rippenplatte (20A) die ersten Batteriestapelseite (26) an mehreren Stelle kontaktiert und die zweite Rippenplatte (20B) die zweite Batteriestapelseite (28) an mehreren Stellen kontaktiert.

6. Batterieeinheit nach Anspruch 5, bei der die erste Rippenplatte (20A) und die zweite Rippenplatte (20B) in einer Rücken-an-Rücken-Ausrichtung angeordnet sind und die erste Rippenplatte eine gewellte Rippenplatte mit einander abwechselnden Spitzen (22) und Tälern (24) ist und die zweite Rippenplatte eine gewellte zweite Rippenplatte (20B) mit einander abwechselnden Spitzen (22) und Tälern (24) ist, wobei mehrere der Spitzen der ersten Rippenplatte (20A) die erste Batteriestapelseite (26) kontaktieren und mehrere der Spitzen der zweiten Rippenplatte (20B) die zweite Batteriestapelseite (28) kontaktieren.

7. Batterieeinheit nach Anspruch 5 oder 6, bei der eine Zwischenplatte (44) zwischen der ersten Rippenplatte (20A) und der zweiten Rippenplatte (20B) angeordnet ist.

8. Batterieeinheit nach Anspruch 7, bei der die Zwischenplatte ein aktives Heizelement (48) aufweist.

9. Batterieeinheit nach Anspruch 7 oder 8, bei der die Zwischenplatte Fluidleitungen (50) zum Leiten eines Fluids durch die Zwischenplatte aufweist.

10. Batterieeinheit nach einem der Ansprüche 7 bis 9, bei der die Zwischenplatte ein Phasenänderungsmaterial mit einer Phasenänderungstemperatur, die in einen normalen Betriebstemperaturbereich der Batterieeinheit fällt, umschließt.

11. Batterieeinheit nach Anspruch 5, bei der die Rippenplatten jeweils aus Graphit gebildet sind und sich eine konforme Struktur zwischen ihnen befindet.

12. Batterieeinheit nach einem der Anspruch 1 bis 11, bei der die Wärmetauscherstruktur unter Druckkräften zwischen dem ersten Batteriestapel und dem zweiten Batteriestapel über einen normalen Betriebstemperaturbereich der Batterieeinheit ist.

13. Batterieeinheit nach Anspruch 1, bei der die Wärmetauscherstruktur (18) eine elastisch verformbare, gewellte erste Rippenplatte (20A) mit einander abwechselnden Spitzen und Tälern und eine elastisch verformbare, gewellte zweite Rippenplatte (20B) mit einander abwechselnden Spitzen und Tälern aufweist, wobei die erste und die zweite Rippenplatte einander benachbart angeordnet sind und mehrere der Spitzen der ersten Rippenplatte (20A) die erste Batteriestapelseite (26) kontaktieren und mehrere Spitzen der zweiten Rippenplatte (20B) die zweite Batteriestapelseite kontaktieren.

14. Batterieeinheit nach Anspruch 13, bei der die erste Rippenplatte (20A) und die zweite Rippenplatte (208) in einer Rücken-an-Rücken-Ausrichtung angeordnet sind, wobei die Täler die ersten Rippenplatte mit jeweiligen Tälern der zweiten Rippenplatte ausgerichtet sind.

15. Batterieeinheit nach Anspruch 13 oder 14, bei der eine Zwischenplatte (44) zwischen der ersten Rippenplatte (20A) und der zweiten Rippenplatte (20B) angeordnet ist.

## Revendications

1. Unité de batterie (10) comprenant :
une première pile de batterie (12) comprenant une pluralité de modules de batterie (14), chacun des modules de batterie logeant une ou plusieurs cellules de batterie (16), la pluralité de modules de batterie (14) de la première pile de batterie (12) définissant un premier côté de pile de batterie (26);
une seconde pile de batterie (12) comprenant une pluralité de modules de batterie (14), chacun des modules de batterie logeant une ou plusieurs cellules de batterie (16), la pluralité de modules de batterie (14) de la seconde pile de batterie (12) définissant un second côté de pile de batterie (28) qui est espacé du premier côté de pile de batterie et qui lui fait face ; et
une structure d'échangeur thermique (18) disposée entre la première pile de batterie (12) et la seconde pile de batterie (12) et définissant un ou plusieurs passages de circulation de fluide (30), la structure d'échangeur thermique comportant un premier côté (22, 22A) en contact avec le premier côté de pile de batterie (26) sur une pluralité des modules de batterie (14) et un second côté (24, 24B) en contact avec le second côté de pile de batterie (28) sur une pluralité des modules de batterie (14), dans lequel la structure d'échangeur thermique peut être déformée élastiquement de manière à se comprimer sous l'effet de la dilatation des première et seconde piles de batterie et à se dilater sous l'effet de la contraction subséquente des première et seconde piles de batterie.

2. Unité de batterie selon la revendication 1, dans laquelle la structure d'échangeur thermique (18) comprend une plaque d'ailettes striées (20) comportant en alternance des crêtes (22) et des vallées (24) définissant les passages de circulation de fluide (30) entre elles, au moins certaines des crêtes (22) entrant en contact avec le premier côté de pile de batterie (26) et au moins certaines des vallées (24) entrant en contact avec le second côté de pile de batterie (28) afin de faciliter un échange thermique entre la plaque d'ailettes et les première et secondes piles de batterie.

3. Unité de batterie selon la revendication 2, dans laquelle les striures de plaque d'ailettes sont déchiquetées de telle sorte que les vallées sur des côtés opposés de la plaque soient alignées.

4. Unité de batterie selon la revendication 1, dans laquelle la structure d'échangeur thermique (14) comprend une plaque d'ailettes (34) définissant des rangées de parties semi-cylindriques parallèles jointes par des parties planes, au moins certaines des parties semi-cylindriques entrant en contact avec le premier côté de pile de batterie (26) et au moins certaines des parties planes entrant en contact avec le second côté de pile de batterie (28) afin de faciliter un échange thermique entre la plaque d'ailettes et les première et seconde piles de batterie.

5. Unité de batterie selon la revendication 1, dans laquelle la structure d'échangeur thermique (18) comprend une première plaque d'ailettes (20A) et une seconde plaque d'ailettes (20B), les première et seconde plaques d'ailettes étant positionnées de manière à être adjacentes l'une à l'autre, la première plaque d'ailettes (20A) entrant en contact avec le premier côté de pile de batterie (26) en une pluralité de positions et la seconde plaque d'ailettes (20B) entrant en contact avec le second côté de pile de batterie (28) en une pluralité de positions.

6. Unité de batterie selon la revendication 5, dans laquelle la première plaque d'ailettes (20A) et la seconde plaque d'ailettes (20B) sont agencées selon un alignement dos-à-dos et la première plaque d'ailettes est une plaque d'ailettes striées comportant en alternance des crêtes (22) et des vallées (24) et la seconde plaque d'ailettes est une seconde plaque d'ailettes striées (20B) comportant en alternance des crêtes (22) et des vallées (24), une pluralité des crêtes de la première plaque d'ailettes (20A) entrant en contact avec le premier côté de pile de batterie (26) et une pluralité des crêtes de la seconde plaque d'ailettes (20B) entrant en contact avec le second côté de pile de batterie (28).

7. Unité de batterie selon la revendication 5 ou 6, dans laquelle une plaque intermédiaire (44) est positionnée entre la première plaque d'ailettes (20A) et la seconde plaque d'ailettes (20B).

8. Unité de batterie selon la revendication 7, dans laquelle la plaque intermédiaire comprend un élément chauffant actif (48).

9. Unité de batterie selon la revendication 7 ou 8, dans laquelle la plaque intermédiaire comprend des conduits de fluide (50) pour acheminer un fluide au travers de la plaque intermédiaire.

10. Unité de batterie selon l'une quelconque des revendications 7 à 9, dans laquelle la plaque intermédiaire renferme un matériau à changement de phase présentant une température de changement de phase tombant à l'intérieur d'une plage de températures de fonctionnement normale de l'unité de batterie.

11. Unité de batterie selon la revendication 5, dans laquelle les plaques d'ailettes sont chacune formées à partir de graphite et une structure conforme est positionnée entre elles.

12. Unité de batterie selon l'une quelconque des revendications 1 à 11, dans laquelle la structure d'échangeur thermique est soumise à des forces de compression entre la première pile de batterie et la seconde pile de batterie sur une plage de températures de fonctionnement normale de l'unité de batterie.

13. Unité de batterie selon la revendication 1, dans laquelle la structure d'échangeur thermique (18) comprend une première plaque d'ailettes striées déformables élastiquement (20A) comportant en alternance des crêtes et des vallées, et une second plaque d'ailettes striées déformables élastiquement (20B) comportant en alternance des crêtes et des vallées, les première et seconde plaques d'ailettes étant positionnées de manière à être adjacentes l'une à l'autre, une pluralité des crêtes de la première plaque d'ailettes (20A) entrant en contact avec le premier côté de pile de batterie (26) et une pluralité des crêtes de la seconde plaque d'ailettes (20B) entrant en contact avec le second côté de pile de batterie.

14. Unité de batterie selon la revendication 13, laquelle la première plaque d'ailettes (20A) et la seconde plaque d'ailettes (20B) sont agencées selon un alignement dos-à-dos, les vallées de la première plaque d'ailettes étant alignées avec les vallées respectives de la seconde plaque d'ailettes.

15. Unité de batterie selon la revendication 13 ou 14, dans laquelle une plaque intermédiaire (44) est positionnée entre la première plaque d'ailettes (20A) et la seconde plaque d'ailettes (20B).
